# EUROPEAN PATENT SPECIFICATION

(11) **EP 1 688 329 B1**
(45) Date of publication and mention of the grant of the patent: **17.12.2008**
(21) Application number: 05100702.9
(22) Date of filing: 02.02.2005
(51) Int. Cl.: B60T 1/10, B60T 7/04, B60T 13/58, G05G 1/14

(54) **Method, device and use of deceleration control of a vehicle**
Verfahren, Anordnung, und Verwendung von Verzögerungssteuerung eines Fahrzeuges
Procédé, dispositif et utilisation d'un contrôle de la décélération d'un véhicule

(43) Date of publication of application: 09.08.2006
(73) Proprietor: Ford Global Technologies, LLC, A subsidary of Ford Motor Company, Dearborn, MI 48126 (US)
(72) Inventor: Eifert, Mark, 80809 München (DE); Leyten, Max, 6291 EM Vaals (NL)
(74) Representative: Dörfler, Thomas

(56) References cited:
- EP-A- 1 074 418
- DE-A1- 10 118 436
- DE-A1- 10 148 281
- DE-A1- 19 643 079
- US-A- 5 984 034

## Description

The invention relates to a vehicle with an engine, an accelerator for controlling the engine, an electrical device for generating electrical power via a braking and regeneration operation when the vehicle is to be decelerated and a control apparatus for controlling deceleration via the accelerator and the electrical device and at least one sensor for detecting a deceleration situation. The invention also relates to a corresponding method of deceleration control of a vehicle.

Descending steep mountain passes with a road vehicle is usually accomplished by either using a low gear and driving with high engine speeds or by driving with a higher gear and braking often. The first case is potentially uncomfortable for the driver, because it forces him to drive with high engine speeds, and he will tend to descend at a speed dictated by the road grade and the braking power of the combustion engine. Typically, speed is adjusted according to the position of the accelerator, but the engine's redline may soon be reached and the next gear will be too high to provide sufficient engine braking. While driving with a high gear the speed may therefore be adjusted by the brake. However over a long descent this is dangerous, because the brakes may overheat. Also this increases brake wear.

In a conventional vehicle, the engine output power corresponds to the accelerator pedal position. A minimum amount of power is required to maintain a given speed in order to overcome aerodynamic drag and mechanical friction losses. Accelerator angles that correspond to an output power that is less than the minimum required for a given speed will cause vehicle deceleration. However, the threshold, i.e. the accelerator angle at which deceleration begins, is speed dependent, because aerodynamic drag and mechanical friction are both speed dependent. A vehicle descending a winding mountain road typically is driven at a relatively low speed at which the threshold pedal position is small, i. e. the path of travel corresponding to deceleration is short, and so it is difficult for the driver to dose the speed as required.

It is known that for conventional trucks use retardation devices to assist the brakes during deceleration. Such mechanisms dissipate energy using a variety of mechanisms including electric generators that feed their power into resistors, hydraulic and pneumatic systems and exhaust gas systems. A similar system is disclosed in the DE 196 43 079 A1. This system includes a control, which uses signals from the gear box to control the braking torque of a retardation device such that its braking torque does not exceed the maximum braking torque for a certain gear.

EP 1 074 418 A1 discloses a control apparatus of a hybrid vehicle, wherein said hybrid vehicle comprises an engine for outputting force for driving the vehicle, an electric motor for assisting the output from the engine according to the driving state of the vehicle and a battery device for storing energy generated using the motor as a generator driven by the engine and energy regenerated via a regenerating operation performed by the motor when the vehicle is decelerated. The control apparatus includes a speed limiting function for stopping the operation of the motor from assisting the engine output when the engine output is assisted by the motor and when the speed of the vehicle exceeds a predetermined first threshold value and a regenerating operation initialization function for starting the regenerating operation of the motor when the speed of the vehicle exceeds a predetermined second threshold value which is larger than the first threshold value.

DE 197 18 709 A1 relates to a hybrid vehicle, in which the driving or braking force of a first propulsion machine is assisted by the driving or braking force of a second propulsion machine. The vehicle further comprises an apparatus for detecting braking necessity with the first propulsion machine being idle and a first braking device, which prevents a speed rise of the vehicle by use of regenerating braking force of the second propulsion machine, when the detection apparatus detects a braking necessity. According to the description the second driving machine is typically an electrical motor, which may be used in regeneration generator mode. A braking necessity is detected by a gradient sensor, if the vehicle is on a downhill descent.

A device for controlling the drivetrain of a motor vehicle is disclosed in the WO 2000/028845 A1. The motor vehicle has an internal combustion engine, a manual transmission and electric machine arranged in such a way that it interacts with the manual transmission, wherein a protective measure is executed depending on a given operating state of the motor vehicle in order to maintain safe and comfortable operation of the motor vehicle. The given operating state is existent, if the motor vehicle is on a downhill descent with the accelerator pedal not being pressed and if the acceleration of the vehicle is larger than a predetermined value simultaneously. Then the electric machine is used in a braking and regenerating operation to decelerate the vehicle.

US 5 984 034 discloses a hybrid vehicle with an engine, an accelerator for controlling the engine, an electrical device for generating electrical power via a braking and regeneration operation when the vehicle is to be decelerated and a control apparatus for controlling deceleration. This hybrid vehicle is given a braking demand detecting function to detect a braking demand through an idle of the engine while the vehicle is running, and a first braking function to suppress the rise in the vehicle speed of the vehicle by a regenerative braking force of the motor if the braking demand is detected. Further control of the braking force can be done by actuating the brake pedal. This may be inconvenient for the driver, especially if during a longer braking period short time acceleration is required.

The object of the present invention is to provide a vehicle with a control apparatus for controlling deceleration which allows for improved and sensitive controllability of deceleration, especially on a descent, while also improving driver comfort. Furthermore braking energy is to be regenerated and brake wear reduced.

This problem is solved by the vehicle of claim 1 and also by the method for deceleration control of claim 11.

Since the control apparatus comprises means for controlling the relation between accelerator position and deceleration power of the electrical device in a deceleration situation, it is possible to directly control the amount of deceleration power provided by the electrical device.

The invention uses the electric device in the vehicle that is used to generate electrical power (e.g. the alternator in a conventional vehicle) to help brake the vehicle in a deceleration situation, e. g. on a descent. On-board sensors (e.g. a filtered fuel tank level sensor acting as an inclination sensor), map data or telematic information may detect the descent. When a deceleration is detected, the electric device is controlled with respect to the accelerator position. A vehicle usually decelerates when the accelerator is only pressed a few degrees by the driver.

However the invention allows the controller to remap the interpretation of the accelerator pedal position during deceleration or descents so that a larger amount of its travel corresponds to deceleration. Further, it controls the electric device such that a constant deceleration power is set for a given accelerator pedal position. These two measures improve the controllability of the descent by the driver by improving the ergonomics of the driver-vehicle interface.

Driver comfort is improved by lowering engine speed and decreasing work load on the driver during a descent by allowing him to set speed with the accelerator instead of hunting for a combination of gear and accelerator pedal angle or having to constantly brake.

The invention is applicable to all vehicle sizes, also passenger vehicles with small engines (an engine brake used on heavy-duty trucks requires significant packaging space) and to commercial, conventional, (mild-)hybrid and electric vehicles.

Besides the improvements in driver comfort, the invention also helps lower fuel consumption through the regenerative braking effect of the electric device, as braking energy is converted into storable electrical energy instead of waste heat energy.

The invention also allows for reduced brake wear, such as brake pad and brake disc usage and reduced risk of brake fading by overheating.

The invention is most helpful where the deceleration situation is due to a downhill descent especially a longer lasting one.

Useful sensors for detecting a descent may include an inclination sensor, especially fuel tank level sensor (buoy), an altitude sensor or an on-board GPS with an electronic map system or a telematic system. Such a telematic system may receive the coordinates of a vehicle that are ascertained by a GPS and communicate to the vehicle that it is on a road with a descent.

If the vehicle includes an automatic transmission or automated shifting manual transmission (ASM) and the control apparatus comprises means for choosing gears and/or adjusting a clutch or torque converter, it is possible to have the control apparatus automatically pick the appropriate gear and torque for deceleration. This may be combined with a means for using the cruise control speed setting to calculate the gear and/or torque for deceleration, if the vehicle further includes a cruise control. In the case where an automatic transmission or ASM (automated shifting manual transmission) is used in a vehicle, the strategy may also pick a gear and adjust the torque converter in such a way that it allows for the best controllability of the descent. Then the average descent speed and grade may be used to calculate a deceleration power, and a gear is chosen that puts the engine speed in a comfortable range (ideally between 1000 - 2000 rpm). Therefore the proposed solution also offers improved driver comfort by lowering the interior noise level.

The average descent speed may be calculated by looking at the average speed driven over a time horizon in the past, using telematic information describing the average vehicle speed on the descent or by using telematic or map-based information giving the speed limit. When a cruise control is used, the set speed may be used to calculate the most desirable gear. Therefore the cruise control must not be deactivated while driving downhill.

The electrical device may be an alternator, starter-alternator, electric motor in a hybrid vehicle or a retardation device. Conventional trucks use retardation devices assisting the brakes during deceleration. Such mechanisms dissipate energy using a variety of mechanisms including electric generators that feed their power into resistors, hydraulic and pneumatic systems and exhaust gas systems. The invention may be used with these systems as well by using the accelerator pedal to control them to generate a deceleration moment corresponding to the pedal position and remapping the pedal to allow a significant amount of its travel to correspond to a deceleration command when a descent is detected.

If an alternator, starter-alternator or the electric machine in a hybrid vehicle is used to decelerate a vehicle, the electric power that is generated may overcharge and damage the battery. Furthermore, the high electric power will cause the voltage on the vehicle's power distribution network to abruptly rise to a higher than allowed voltage level. Both the voltage transition and the high voltage level may disrupt or damage other electrical or electronic devices on the bus. In order to eliminate or minimize these problems, electrical loads may be switched on when an electric machine begins to generate. Ideally, these electrical loads may be controlled to absorb only that power which causes the bus voltage to exceed its maximum value or all of the power generated during deceleration to avoid any change in voltage level. Examples of such loads that may be suitable include electric front and rear window defrosters and glow plugs in diesel engines. The loads may be turned on and off and controlled via a power distribution controller that takes the estimated generator power as an input and determines which loads should be activated in order to absorb all or some of this power.

Advantageously the control apparatus may be incorporated into a central drive train controller.

Further features, advantages and details of the invention will become apparent with respect to the following description of the appended drawings, in which
- fig. 1: is a schematic drawing, which shows the interpretation of the accelerator position in a conventional vehicle (left hand side) and in a vehicle according to the present invention (right hand side);
- fig. 2: is a graph showing the relation between the accelerator pedal angle and combined power of engine and electrical device;
- fig. 3: is a graph showing the transition between interpretations of accelerator pedal angle for conventional driving and descents (deceleration situation) and
- fig. 4: is a schematic drawing, which shows the implementation of the present invention in a centralized drivetrain control.

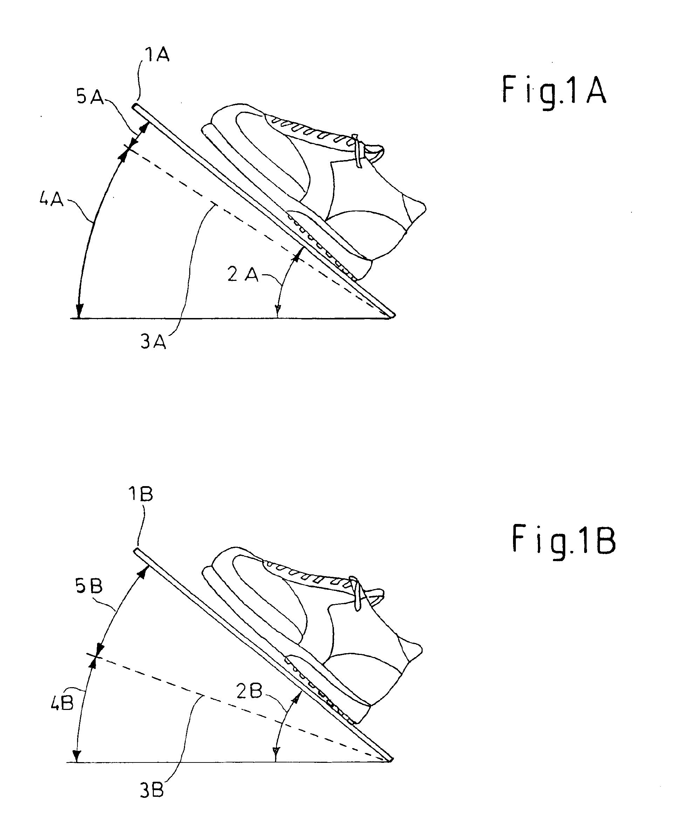

Fig. 1 is a schematic drawing, which shows both the interpretation of the position of the accelerator 1 in a conventional vehicle (left hand side) and in a vehicle according to the present invention (right hand side). The conventional interpretation numerals for like parts are labeled "A" and those according to the invention with "B".

In a conventional vehicle, the engine output power corresponds to the position of the accelerator pedal 1 A. A minimum amount of power is required to maintain a given speed in order to overcome aerodynamic drag and mechanical friction losses for a given speed. Therefore the accelerator pedal 1 A must be pressed below a certain angle. This threshold between acceleration and deceleration is indicated by the dashed line 3A. With the accelerator pedal 1A in the region below it, designated with 4A, the vehicle will accelerate due to increased engine output power. With the accelerator pedal 1 A at the threshold angle 3A the vehicle will keep its speed, as engine output and opposed forces are balanced.

Accelerator angles 2A that correspond to an output power that is less than the minimum required for a given speed will cause vehicle deceleration. Therefore, if the accelerator pedal 1A is only pressed by a small angle, the vehicle will decelerate due to insufficient engine output power. Therefore, with the accelerator pedal 1 in the region above threshold 3A, designated with 5A, the vehicle will decelerate.

A vehicle descending a winding mountain road typically is driven in a deceleration mode speed at which the region 5A above the threshold 3A of the pedal position is small. Therefore the path of travel of the accelerator pedal 1A which relates to deceleration is also small. The invention enables a greater deceleration power to be modulated by the accelerator pedal than that which is available in a conventional vehicle. In order to limit the sensitivity of the control during decelerations, the region 5A corresponding to the deceleration mode must be extended.

In modern vehicles, the accelerator pedal position is measured by a potentiometer, and the angle 2 is sent in the form of an electronic signal to an electronic control unit that interprets the driver's power request using pedal angle and engine speed. The propulsion input from the driver is interpreted with respect to the depression angle 2.

Therefore, after a descent is detected by an appropriate sensor, the interpretation of the angle 2B of the accelerator pedal 1 B may be remapped according to the invention as illustrated in fig. 1 on the right hand side.

In this case the region 5B corresponding to deceleration is expanded by shifting the threshold 3B towards the region 4B corresponding to acceleration. Therefore the path of travel of the accelerator pedal 1 B which relates to deceleration is now larger and accordingly the sensitivity of the pedal is similar to that in acceleration region. Each little movement of the accelerator pedal 1 B is now equivalent to a small change in deceleration, and hence it is easy for the driver to dose the deceleration as required. Simultaneously the electric device is controlled such that a constant deceleration power is set for a given accelerator pedal position. These two measures improve the controllability of the descent by the driver by improving the ergonomics of the driver-vehicle interface. So the relation between accelerator pedal angle 2 and deceleration power is exactly defined and mapped to the region 5B.

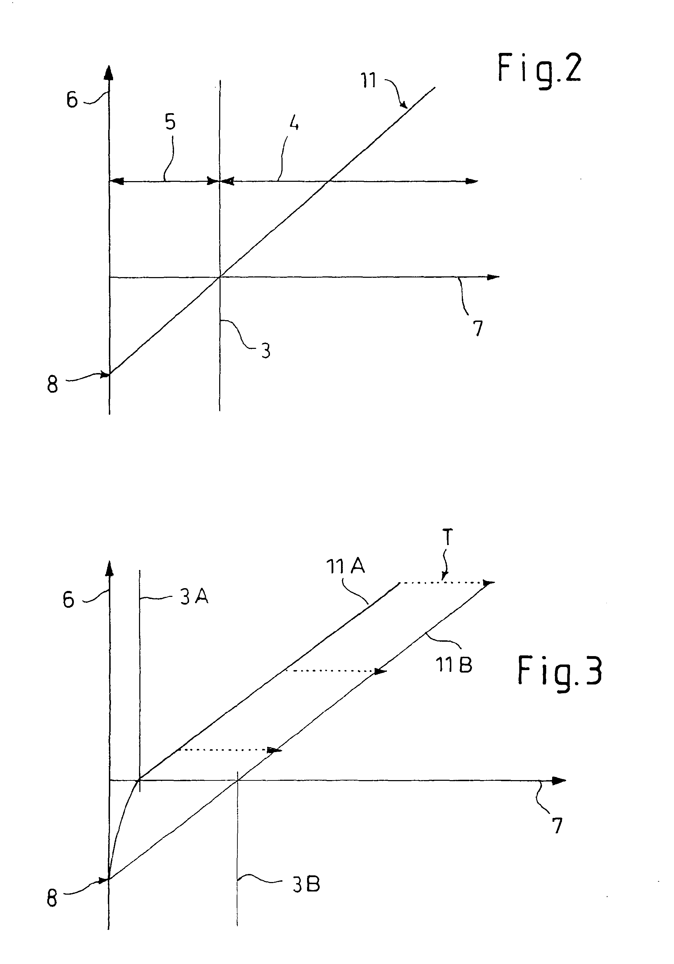

The deceleration power is provided by an electrical device for generating electrical power via a braking and regeneration operation when the vehicle is to be decelerated. According to the invention this deceleration power or torque that is provided by for example the vehicle's alternator (or electric motor in a soft-hybrid or hybrid vehicle) is controlled like the propulsion or driving torque in that it is a function of the accelerator angle 2B. This is illustrated in fig. 2.

Fig. 2 is a graph showing a linear relation 11 between the accelerator pedal angle 7 (abscissa) and combined power 6 of engine and electrical device (ordinate). The threshold between acceleration and deceleration is denominated 3. To the left of the threshold 3 in the region denominated 5, deceleration occurs. The maximum combined deceleration of the engine and the electrical device (alternator) is at the intersection point 8 of the linear relation 11 and the ordinate 6. To the right of the threshold 3 in the region denominated 4, acceleration occurs.

The relation between the pedal angle 7 and combined power 6 does not have to be completely linear but should be chosen to give a driver the best feel of controllability, i.e. may be non linear e.g. progressive, degressive or both.

Two interpretations of the accelerator pedal angle and their transition T are illustrated together in the graph of fig. 3, which corresponds to fig. 2 and also shows the relation 11 between the accelerator pedal angle 7 and combined power of engine and electrical device 6. As in fig. 1 and 2 the conventional interpretation numerals will be labeled "A" and those according to the invention with "B".

During normal driving situations, which do not involve long deceleration periods over many minutes or several hundred meters of descent, the interpretation of the accelerator pedal position is as it is in conventional vehicles. The transition T from the pedal interpretation used for normal driving and the interpretation used when long deceleration periods occur occurs gradually over a few seconds in order to allow the driver to adapt to the change.

The relation 11 A between the accelerator pedal angle 7 (abscissa) and combined power 6 of engine and electrical device (ordinate) is non linear for the conventional driving mode. From the maximum combined deceleration of the engine and the alternator (intersection point) 8 to the threshold 3A between acceleration and deceleration the relationship 11 A may climb with a nonlinear relationship. To the left of the threshold 3A deceleration occurs and to the right of the threshold acceleration occurs. The angle or position of the accelerator pedal that corresponds to deceleration is small.

The relation 11 B in descent mode conforms to that shown in fig. 2 and therefore reference is made to the above description.

During the transition T between the two interpretation modes or relations 11 A and 11 B, not only the threshold 3 is theoretically moved from 3A to 3B along the accelerator pedal angle 7 (abscissa) but also the relationship is changed from nonlinear to linear between intersection point 8 and threshold 3B.

By moving the threshold along the abscissa 7 the angle or position of the accelerator pedal that corresponds to deceleration has been increased. Therefore the path of travel of the accelerator pedal 1 B (fig. 1) which relates to deceleration is now larger and accordingly the sensitivity is similar to that found in the propulsion mode. Each little movement of the accelerator pedal 1 B is now equivalent to a small change in deceleration, and hence it is easy for the driver to dose the deceleration as required. Also the electric device is controlled such that a constant deceleration power is set for a given accelerator pedal position.

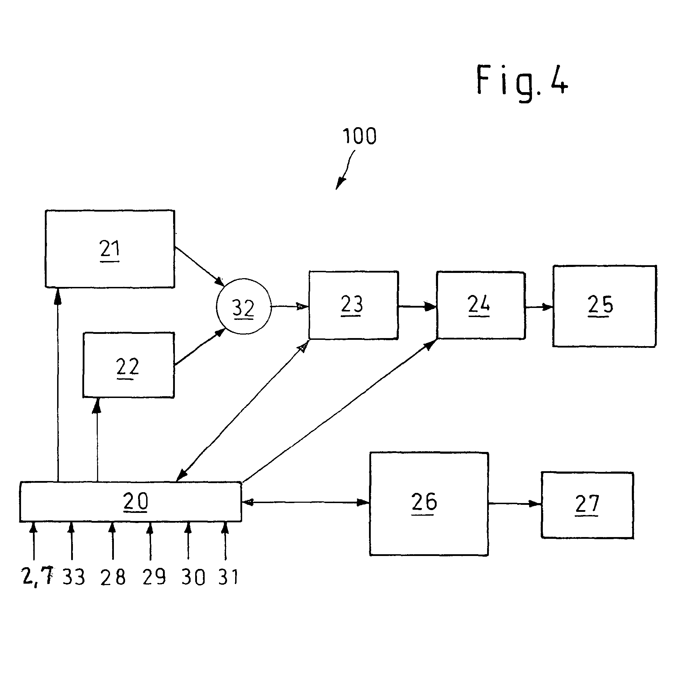

In figure 4 the implementation of the invention using a central drivetrain controller 20 to coordinate the control of an electric motor 22, gearbox 24 and combustion engine 21 of a hybrid vehicle is illustrated. A control apparatus for controlling deceleration via the accelerator 1 and the electric motor 22 is incorporated into the microcontroller of the central drivetrain controller 20.

In figure 4 thick arrows indicate mechanical power flow whereas narrow arrows indicate flow of data and control signals.

Both the combustion engine 21 and the electric motor 22 are mechanically coupled with the drivetrain, designated with 100 as a whole, via a gear set 32. From there power flows via the clutch or torque converter 23 and gearbox 24 to the wheels and differentials 25.

The electric motor 22 is used as is customary in hybrid vehicles either to assist power output from the combustion engine 21, propel the vehicle on its own without the combustion engine 21 or to slow the vehicle by a braking and regeneration operation when the vehicle is to be decelerated.

The central drivetrain controller 20 controls not only the combustion engine 21 and the electric motor 22 and their modes of operation but also receives data input from the accelerator 1, i. e. accelerator pedal angle 2, the clutch 23 (or torque converter), the gearbox 24, brakes 28, speedometer 29, at least one sensor 30 for detecting a deceleration situation, voltmeter 31 for monitoring the power bus power and cruise control 33 and may communicate control signals to these respectively to control deceleration according to the accelerator and further data.

The deceleration situation is typically a descent that is detected by an on-board inclination sensor 30 (e.g. fuel level buoy) or altitude sensor, by the combination of an on-board GPS and electronic map system or by a telematic system.

If an automatic transmission is used in the vehicle, the controller 20 may also pick a gear 24 and control the clutch 23 or a torque converter in such a way that allows for the best controllability of the required deceleration during the detected descent.

The average descent speed from the speedometer 29 and slope of descent from the sensor 30 are used to calculate an appropriate deceleration power, and a gear is chosen that puts the engine speed in a comfortable range (ideally between 1000 - 2000 rpm) and the electric motor 22 is controlled correspondingly.

The average descent speed may be calculated by looking at the average speed driven over a time horizon in the past, using telematic information describing the average vehicle speed on the descent or by using telematic or map-based information giving the speed limit.

When a cruise control 33 is used, the speed setting may be used to calculate the most desirable gear also.

During deceleration the electric motor 22 is used in a braking regeneration mode to decelerate the hybrid vehicle. The electric power that is generated may overcharge and damage the battery. Furthermore, high electric power may cause the voltage on the vehicle's power distribution network to abruptly rise to a higher than allowed voltage level. Both the voltage transition and the high voltage level may disrupt or damage other electrical or electronic devices on the bus. In order to eliminate or minimize these problems, the power bus voltage is monitored by a voltmeter 31 and electrical loads 27 may be switched on when the electric motor 22 begins to generate. Ideally, these electrical loads 27 are controlled to absorb only that power which causes the bus voltage to exceed its maximum value or all of the power generated during deceleration to avoid any change in voltage level. Examples of such loads 27 that may be suitable include electric front and rear window defrosters and glow plugs in diesel engines. The loads may be turned on and off and controlled via a power distribution controller 26 that takes the estimated generator power as an input and determines which loads 27 should be activated in order to absorb all or some of this power.

## Claims

1. A vehicle with an engine (21), an accelerator (1) for controlling the engine, an electrical device (22) for generating electrical power via a braking and regeneration operation when the vehicle is to be decelerated and a control apparatus (20) for controlling deceleration via the accelerator (1) and the electrical device (22) and at least one sensor (30) for detecting a deceleration situation, whereby the control apparatus (20) comprises means for controlling the relation (11) between accelerator position (2) and deceleration power of the electrical device (22) in a deceleration situation, **characterized in that** the control apparatus (20) further comprises means for remapping the interpretation of said accelerator (1) upon detection of a deceleration situation.

2. Vehicle of claim 1,
wherein the means for remapping the interpretation of said accelerator (1) in the control apparatus remaps the accelerator travel (2) such that a large amount of its travel path corresponds to deceleration.

3. Vehicle of one of the claims 1 or 2,
wherein the means for controlling said electrical device (22) control the electrical device such that its braking power results in a constant deceleration for a given accelerator position (2).

4. Vehicle of one of the claims 1 to 3,
wherein the deceleration situation is a descent, especially longer descent.

5. Vehicle of one of the claims 1 to 4,
wherein the sensor (30) includes an inclination sensor, especially fuel tank level sensor, or an altitude sensor or an on-board GPS with an electronic map system or a telematic system.

6. Vehicle of one of the claims 1 to 5,
wherein the vehicle includes an automatic transmission or automated shifting manual transmission (ASM) and the control apparatus comprises means for choosing gears and/or adjusting a clutch or torque converter.

7. Vehicle of claim 6,
wherein the vehicle includes a cruise control (33) and the control apparatus further comprises means for using the cruise control speed setting to calculate the gear and/or torque for deceleration.

8. Vehicle of one of the claims 1 to 7,
wherein the electrical device is an alternator, starter-alternator, electric motor (22) in a hybrid vehicle or a retardation device.

9. Vehicle of one of the claims 1 to 8,
wherein the control apparatus further comprises an electric load control for controlling the voltage level of the vehicle's power distribution network.

10. Vehicle of one of the claims 1 to 9,
wherein the control apparatus is incorporated into a central drive train controller (20).

11. Method for deceleration control of a vehicle with an engine, an accelerator for controlling the engine, an electrical device for generating electrical power via a braking and regeneration operation when the vehicle is to be decelerated and a control apparatus for controlling deceleration via the accelerator and the electrical device, whereby the accelerator position is set in relation to the desired deceleration power of the electrical device upon detection of a deceleration situation, **characterized in that**
the interpretation of said accelerator position is remapped upon detection of a deceleration.

12. Method of claim 11,
wherein the accelerator travel is remapped such that a large amount of its travel path corresponds to deceleration.

13. Method of one of the claims 11 or 12,
wherein the electrical device is controlled such that its braking power results in a constant deceleration for a given accelerator position.

14. Method of one of the claims 11 to 13,
wherein the deceleration situation is a descent, especially longer descent.

15. Method of one of the claims 11 to 14,
wherein gears of an automatic transmission or automated shifting manual transmission (ASM) are chosen and/or a torque converter is adjusted according to deceleration.

16. Method of claim 15,
wherein cruise control setting is used to calculate the gear and/or torque for deceleration.

17. Method of one of the claims 11 to 16,
wherein the electric load of the vehicle's power distribution network is controlled such that its maximum voltage level is not exceeded.

18. Use of the method according to one of claims 11 to 17 in a vehicle according to one of claims 1 to 10.

## Patentansprüche

1. Fahrzeug mit einem Motor (21), einem Fahrpedal (1) zur Steuerung des Motors, einer elektrischen Vorrichtung (22) zur Erzeugung von elektrischer Energie über einen Brems- und Regenerationsbetrieb, wenn das Fahrzeug verzögert werden soll, und einer Steuervorrichtung (20) zur Steuerung der Verzögerung über das Fahrpedal (1) und die elektrische Vorrichtung (22) und mindestens einem Geber (30) zur Erfassung der Verzögerungssituation, wobei die Steuervorrichtung (20) Mittel zur Steuerung der Beziehung (11) zwischen der Fahrpedalposition (2) und der Verzögerungsenergie der elektrischen Vorrichtung (22) in einer Verzögerungssituation umfasst,
**dadurch gekennzeichnet, dass**
die Steuervorrichtung (20) weiterhin ein Mittel zur Kennfelderstellung der Auswertung des Fahrpedals (1) bei Erfassung einer Verzögerungssituation umfasst.

2. Fahrzeug nach Anspruch 1,
wobei das Mittel zur Kennfelderstellung der Auswertung des Fahrpedals (1) in der Steuervorrichtung den Fahrpedalweg (2) so neu abbildet, dass ein großes Ausmaß des Wegs einer Verzögerung entspricht.

3. Fahrzeug nach Anspruch 1 oder 2,
wobei die Mittel zur Steuerung der elektrischen Vorrichtung (22) die elektrische Vorrichtung so steuern, dass ihre Bremskraft zu einer konstanten Verzögerung für eine gegebene Fahrpedalposition (2) führt.

4. Fahrzeug nach einem der Ansprüche 1 bis 3,
wobei die Verzögerungssituation ein Gefälle, insbesondere ein längeres Gefälle, ist.

5. Fahrzeug nach einem der Ansprüche 1 bis 4,
wobei der Geber (30) einen Neigungsgeber, insbesondere einen Tankstandsgeber, oder einen Höhengeber oder ein Bord-GPS-System mit einem elektronischen Kennfelderstellungssystem oder Telematiksystem enthält.

6. Fahrzeugnach einem der Ansprüche 1 bis 5,
wobei das Fahrzeug ein automatisches Getriebe oder ein automatisiertes Handschaltgetriebe (ATM) enthält und die Steuervorrichtung Mittel zum Wählen von Gängen und/oder Einstellen einer Kupplung oder eines Drehmomentwandlers umfasst.

7. Fahrzeug nach Anspruch 6,
wobei das Fahrzeug einen Geschwindigkeitsregler (33) enthält und die Steuervorrichtung weiterhin Mittel zur Verwendung der Geschwindigkeitsreglergeschwindigkeitseinstellung zur Berechnung des Gangs und/oder Drehmoments zur Verzögerung umfasst.

8. Fahrzeug nach einem der Ansprüche 1 bis 7,
wobei die elektrische Vorrichtung ein Drehstromgenerator, ein Starter-Drehstromgenerator, ein Elektromotor (22) in einem Hybridfahrzeug oder eine Verzögerungsvorrichtung ist.

9. Fahrzeug nach einem der Ansprüche 1 bis 8,
wobei die Steuervorrichtung weiterhin eine Steuerung der elektrischen Last zum Steuern des Spannungspegels des Fahrzeugenergieverteilungsnetzes umfasst.

10. Fahrzeug nach einem der Ansprüche 1 bis 9,
wobei die Steuervorrichtung in einer zentralen Antriebsstrangsteuerung (20) integriert ist.

11. Verfahren zur Verzögerungssteuerung eines Fahrzeugs mit einem Motor, einem Fahrpedal zur Steuerung des Motors, einer elektrischen Vorrichtung zur Erzeugung von elektrischer Energie über einen Brems- und Regenerationsbetrieb, wenn das Fahrzeug verzögert werden soll, und einer Steuervorrichtung zur Steuerung der Verzögerung über das Fahrpedal und die elektrische Vorrichtung, wobei die Fahrpedalposition in Beziehung zu der gewünschten Verzögerungskraft der elektrischen Vorrichtung bei Erfassung einer Verzögerungssituation eingestellt wird,
**dadurch gekennzeichnet, dass** die Auswertung der Fahrpedalposition bei Erfassung einer Verzögerung neu abgebildet wird.

12. Verfahren nach Anspruch 11,
wobei der Fahrpedalweg neu abgebildet wird, so dass ein großes Ausmaß seines Wegs Verzögerung entspricht.

13. Verfahren nach Anspruch 11 oder 12,
wobei die elektrische Vorrichtung so gesteuert wird, dass ihre Bremskraft zu einer konstanten Verzögerung für eine gegebene Fahrpedalposition führt.

14. Fahrzeug nach einem der Ansprüche 11 bis 13,
wobei die Verzögerungssituation ein Gefälle, insbesondere ein längeres Gefälle, ist.

15. Fahrzeug nach einem der Ansprüche 11 bis 14,
wobei gemäß Verzögerung Gänge eines automatischen Getriebes oder eines automatisierten Handschaltgetriebes (ATM) gewählt werden und/oder ein Drehmomentwandler eingestellt wird.

16. Verfahren nach Anspruch 15,
wobei eine Geschwindigkeitsregelungseinstellung zur Berechnung des Gangs und/oder des Drehmoments zur Verzögerung verwendet wird.

17. Verfahren nach einem der Ansprüche 11 bis 16,
wobei die elektrische Last des Energieverteilungsnetzes des Fahrzeugs so gesteuert wird, dass sein maximaler Spannungspegel nicht überschritten wird.

18. Verwendung des Verfahrens nach einem der Ansprüche 11 bis 17 in einem Fahrzeug nach einem der Ansprüche 1 bis 10.

## Revendications

1. Véhicule comprenant un moteur (21), un accélérateur (1) pour commander le moteur, un dispositif électrique (22) pour générer de la puissance électrique par le biais d'une opération de freinage et de régénération lorsque le véhicule doit être décéléré et un appareil de commande (20) pour commander la décélération par le biais de l'accélérateur (1) et du dispositif électrique (22) et au moins un capteur (30) pour détecter une situation de décélération, l'appareil de commande (20) comprenant des moyens pour commander la relation (11) entre la position de l'accélérateur (2) et la puissance de décélération du dispositif électrique (22) dans une situation de décélération, **caractérisé en ce que** l'appareil de commande (20) comprend en outre des moyens pour remapper l'interprétation dudit accélérateur (1) à la détection d'une situation de décélération.

2. Véhicule selon la revendication 1, dans lequel les moyens pour remapper l'interprétation dudit accélérateur (1) dans l'appareil de commande remappent la course (2) de l'accélérateur de telle sorte qu'une grande quantité de sa trajectoire de déplacement corresponde à la décélération.

3. Véhicule selon la revendication 1 ou 2, dans lequel les moyens pour commander ledit dispositif électrique (22) commandent le dispositif électrique de telle sorte que sa puissance de freinage donne lieu à une décélération constante pour une position donnée (2) de l'accélérateur.

4. Véhicule selon l'une quelconque des revendications 1 à 3, dans lequel la situation de décélération est une descente, en particulier une descente plus longue.

5. Véhicule selon l'une quelconque des revendications 1 à 4, dans lequel le capteur (30) comporte un capteur d'inclinaison, en particulier un capteur de niveau de réservoir de carburant, ou un capteur d'altitude ou un GPS embarqué avec un système de mappage électronique ou un système de télématique.

6. Véhicule selon l'une quelconque des revendications 1 à 5, dans lequel le véhicule comporte une transmission automatique ou une transmission manuelle à changement de vitesse automatisé (ASM) et l'appareil de commande comprend des moyens pour sélectionner les vitesses et/ou ajuster un embrayage ou un convertisseur de couple.

7. Véhicule selon la revendication 6,
dans lequel le véhicule comporte une commande de vitesse de croisière (33) et l'appareil de commande comprend en outre des moyens pour utiliser le réglage de la vitesse de la commande de vitesse de croisière pour calculer la vitesse et/ou le couple en vue de la décélération.

8. Véhicule selon l'une quelconque des revendications 1 à 7,
dans lequel le dispositif électrique est un alternateur, un démarreur-alternateur, un moteur électrique (22) dans un véhicule hybride ou un dispositif de retardement.

9. Véhicule selon l'une quelconque des revendications 1 à 8, dans lequel l'appareil de commande comprend en outre une commande de charge électrique pour commander le niveau de tension du réseau de distribution de puissance du véhicule.

10. Véhicule selon l'une quelconque des revendications 1 à 9, dans lequel l'appareil de commande est incorporé dans un contrôleur de chaîne cinématique centrale (20).

11. Procédé de commande de la décélération d'un véhicule comprenant un moteur, un accélérateur pour commander le moteur, un dispositif électrique pour générer de la puissance électrique par le biais d'une opération de freinage et de régénération lorsque le véhicule doit être décéléré et un appareil de commande pour commander la décélération par le biais de l'accélérateur et du dispositif électrique, la position de l'accélérateur étant fixée par rapport à la puissance de décélération souhaitée du dispositif électrique à la détection d'une situation de décélération,
**caractérisé en ce que**
l'interprétation de ladite position d'accélérateur est remappée à la détection d'une décélération.

12. Procédé selon la revendication 11,
dans lequel la course de l'accélérateur est remappée de telle sorte qu'une grande quantité de sa trajectoire de déplacement corresponde à la décélération.

13. Procédé selon l'une quelconque des revendications 11 ou 12,
dans lequel le dispositif électrique est commandé de telle sorte que sa puissance de freinage entraîne une décélération constante pour une position donnée de l'accélérateur.

14. Procédé selon l'une quelconque des revendications 11 à 13,
dans lequel la situation de décélération est une descente, en particulier une descente plus longue.

15. Procédé selon l'une quelconque des revendications 11 à 14,
dans lequel les rapports d'une transmission automatique ou d'une transmission manuelle à changement de vitesse automatisé (ASM) sont sélectionnés et/ou un convertisseur de couple est ajusté en fonction de la décélération.

16. Procédé selon la revendication 15,
dans lequel le réglage de la vitesse de croisière est utilisé pour calculer la vitesse et/ou le couple pour la décélération.

17. Procédé selon l'une quelconque des revendications 11 à 16,
dans lequel la charge électrique du réseau de distribution de puissance du véhicule est commandée de telle sorte que le niveau de tension maximum ne soit pas dépassé.

18. Utilisation du procédé selon l'une quelconque des revendications 11 à 17 dans un véhicule selon l'une quelconque des revendications 1 à 10.
